# EUROPEAN PATENT SPECIFICATION

(11) **EP 3 726 069 B1**
(45) Date of publication and mention of the grant of the patent: **28.12.2022**
(21) Application number: 19382295.4
(22) Date of filing: 16.04.2019
(51) Int. Cl.: F16B 19/00, F16B 43/00, F16B 5/06, F16B 21/08

(54) **FIXATION CLIP**
BEFESTIGUNGSCLIP
PINCE DE FIXATION

(43) Date of publication of application: 21.10.2020
(73) Proprietor: Illinois Tool Works Inc., Glenview, IL 60025 (US)
(72) Inventor: Arteta, Javier, 08520 Barcelona (ES); Cuervas, Francisco, 08520 Barcelona (ES); Criado, Francisco, 08520 Barcelona (ES)
(74) Representative: HGF

(56) References cited:
- WO-A1-2012/058215
- WO-A1-2016/209357
- WO-A1-2017/095528
- AU-B2- 503 037
- CA-A- 1 053 041
- DE-A1- 19 806 827
- DE-U1-202007 002 071
- US-A- 3 299 766
- US-A- 4 364 427
- US-A1- 2003 159 256
- US-A1- 2012 261 942

## Description

### Object of the invention

The present invention refers to fixation clips for being fixed to a surface which has an aperture in it. Such clips or fasteners are used for example to fasten trim panels to sheet metal panels of motor cars.

### Background of the invention

Fixation clips are used in metal-sheet holes of different types in a wide variety of construction elements. Clips (see e.g. the documents WO 2012/058215 A and DE 198 068 27 A) are very common in the motor vehicle industry and are used, for example, to secure panels, but also other types of functional elements, as e.g. cables, pipe conduits of various kinds, etc. Mechanical friction may arise between fixation clips and the metal-sheet hole implying an undesired corrosion of materials. Furthermore, those clips may not achieve a sealing function. Moreover, conventional procedures for manufacturing fixation clips may include assemblies of separated pieces which may incur in time consuming and complexity. Hence, there is a need for obtaining fixation clips that solve the aforementioned drawbacks in conventional clips. The present invention aims to solve at least these problems.

### Description of the invention

The present invention relates to fixation clips to be fixed in metal-sheet holes.

In a first aspect, it is proposed a fixation clip adapted to be fixed to a support metal element having a fastening opening. The fixation clip comprises a plug element having a holding head, a top and a plug-in tip which can be inserted into the fastening opening of the support metal element, wherein the plug-in tip and the top are fixedly connected to each other by a shaft.

The fixation clip further comprises a movable sealing disk having a central hole and being overmolded around the shaft of the fixation clip. The movable disk has a slip surrounding a lower part of the shaft which is adjacent to the plug-in tip. The movable sealing disk is adapted to engage the support metal element by the fastening opening. This can be achieved by inserting the plug-in tip and the slip into the fastening opening of the support metal element. Furthermore, a force applied on the holding head causes the shaft to be downwardly moved through the central hole such that the top of the plug element can contact the movable sealing disk which is engaged to the support metal element, and causing this; the fixation of the clip to the support metal element. The structural characteristics of the fixation clip, and in particular, the use of the aforementioned movable disk permits that the user can apply the force on the holding head with a reduced strength.

In some examples, the plug element is obtained by a one machine shot. The proposed fixations clips according to the present invention use existing technologies as e.g. plastic injection and overmoulding instead of piece assembly as in conventional fixation clips. In some examples, the plug element comprises a hard plastic body.

In some examples, the movable sealing disk comprises at least two parts or sectors defining hollows between sectors in order to reduce assembly forces of the clip for the final application.

Hence, the first aspect proposes a fixation clip comprising a movable sealing disk that avoid friction between the clip and the metal-sheet hole. This may permit avoiding corrosion.

In a second aspect, it is proposed a fixation clip adapted to be fixed to a support metal element having a fastening opening. The fixation clip comprises a plug element comprising a holding head, a top and a plug-in tip which can be inserted into the fastening opening of the support metal element. The plug-in tip and the top are fixedly connected to each other by a shaft.

The fixation chip further comprises a bendable sealing part having a spinning-top shape, the bendable sealing part having a slip surrounding a lower part of the shaft which is adjacent to the plug-in tip. The bendable sealing part is adapted to engage the support metal element by the fastening opening by the insertion of the plug-in tip and the slip into the fastening opening of the support metal element, wherein a force applied on the holding head causes the top of the plug element to flatten the bendable sealing part against the support metal element and thus, achieving fixation of the clip to the support metal element.

The first and the second aspects obtain an improved fixing and sealing function thanks to the movable disk and the bendable part, respectively. The first and second aspects permit fast and simple manufacture processes and therefore, a cost reduction is achieved. In some examples, the first and second aspects can be used e.g. to fix the wheel arch of a motor vehicle.

### Brief description of the drawings

For a better understanding the above explanation and for the sole purpose of providing an example, some non-limiting drawings are included that schematically depict a practical embodiment.
Figure 1 shows an example of a first fixation clip according to the first aspect of the present invention.
Figures 2A and 2B show a top view and a section of the first fixation clip.
Figures 3 to 6 show the first fixation clip entering into a metal-sheet hole to perform fixation.
Figure 7 shows a first example of coupling means for coupling the movable disk to the shaft.
Figure 8 shows a second example of coupling means for coupling the movable disk.
Figures 9, 10 and 11 show how the movable disk is coupled to the coupling means.
Figures 12A and 12B show a top view and a section of the first fixation clip fixed to the metal sheet-hole.
Figure 13 shows an example of a second fixation clip according to the second aspect of the present invention.
Figures 14A and 14B show a top view and a section of the second fixation clip.
Figures 15 to 18 show the second fixation clip entering into a metal-sheet hole to perform fixation.
Figures 19A and 19B show a top view and a section of the second fixation clip fixed to the metal sheet-hole.

### Description of a preferred embodiment

In order to protect the metal-sheet hole from the shaft of the fixation clip when the clip is inserted into the metal-sheet hole, a soft part between the metal-sheet hole and the clip is proposed in the present disclosure.

Hence, the first aspect relates to a movable disk which once it is engaged to the metal, it moves with the metal. Furthermore, it protects and makes the metal sheet part tight.

The second aspect relates to a spinning-top shape part which is bendable upon an applied flattening force and permits protection of the metal sheet part, as well as fixation and sealing.

### First aspect:

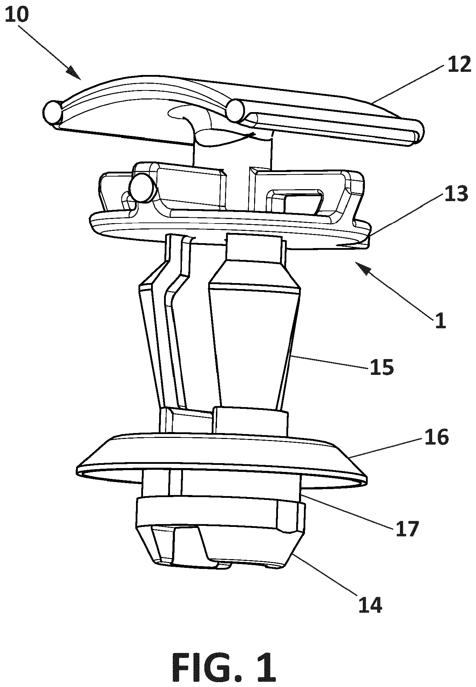

The first aspect according to the present invention relates to the fixation clip including an overmoulded movable disk which is represented in figures 1 to 12. The plug element of the fixation clip can be obtained by tooling in one shot in which the movable disk is overmoulded, so the disk can move once it is assembled or engaged to the metal sheet, and thus, in-house assembly costs are avoided.

The overmoulded disk comprises slips that when insertion on sheet-metal hole, provides the sealing function. Furthermore, in some examples, the disk can be divided in some sectors defining e.g. a hollow between two adjacent sectors in order to reduce assembly forces of the clip on the final application and enhance coupling between the disk and the plug.

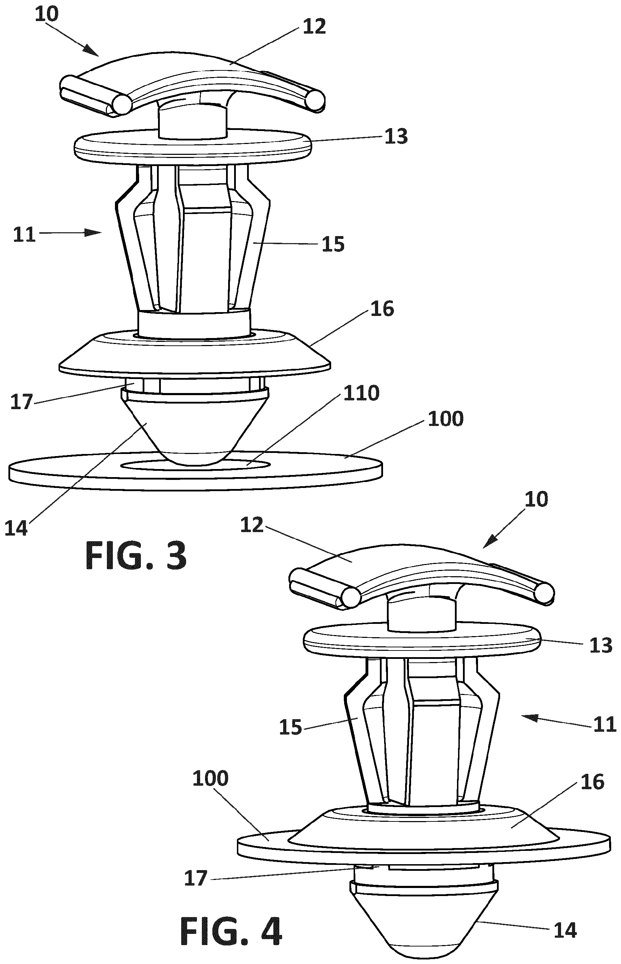

Figure 1 shows an example of a fixation clip (10) according to the present invention. The fixation clip (10) is adapted to be fixed to a support metal element (100) having a hole or fastening opening (110) which is shown in figure 3.

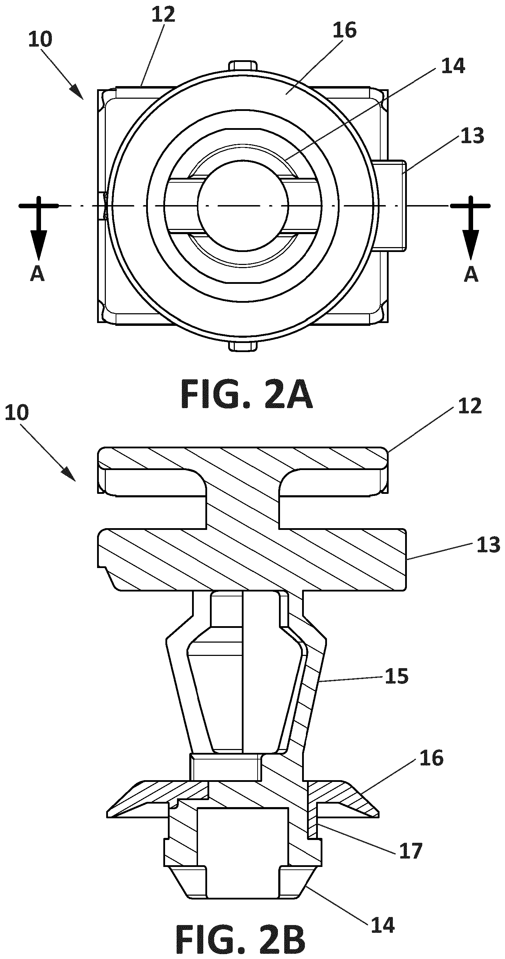

As shown in figure 1, the fixation clip (10) comprises a main body which is a plug element (11) that comprises a holding head (12) adapted to be held by a user applying a force onto the holding head (12). Furthermore, the plug element (11) comprises a top (13) and a plug-in tip (14) which can be inserted into the fastening opening (110) of the support metal element (100). The fastening opening (110) of the support metal element (100) is shown in figures 3 and 4. Figure 2 shows a top view and a section of the clip (10) that shows the section of the aforementioned elements of the clip (10).

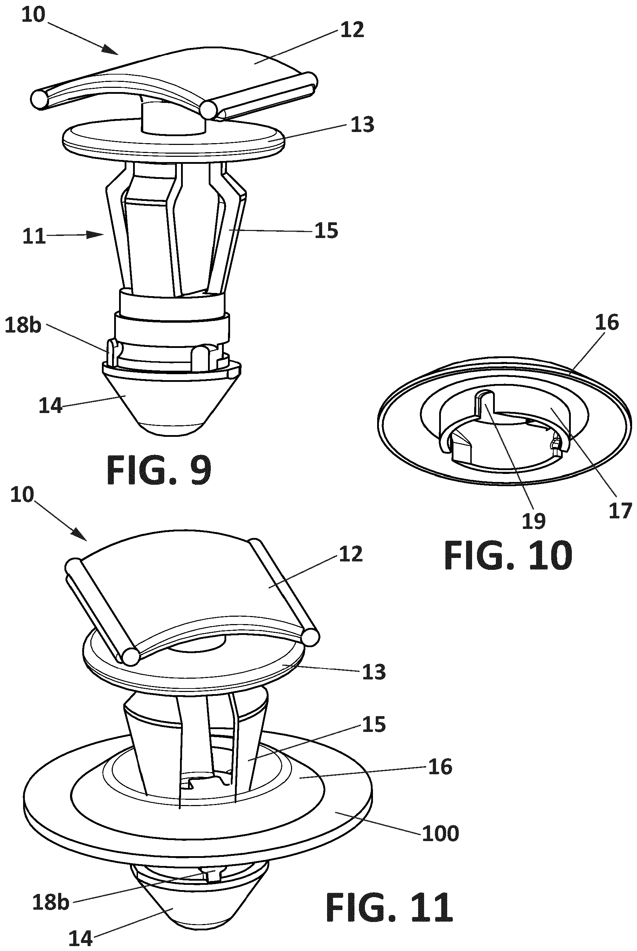

The plug-in tip (14) and the top (13) are fixedly connected to each other by a shaft (15). A movable sealing disk (16) having a central hole is also shown in figure 1. The central hole of the movable sealing disk (16) is shown in figure 10. The movable sealing disk (16) can be overmolded around the shaft (15) as shown in figure 1. Furthermore, the movable disk (16) has a slip (17) that surrounds a lower part of the shaft (15) which is adjacent to the plug-in tip (14) as shown in figure 1. In some examples, the movable sealing disk (16) may be overmolded around the shaft (15) of the fixation clip (10) without chemical adhesion.

As shown in figures 3 and 4, the movable sealing disk (16) is adapted to engage the support metal element (100) by the fastening opening (110). This is achieved by inserting the plug-in tip (14) and the slip (17) into the fastening opening (110) of the support metal element (100). Figures 3 and 4 show the insertion of the clip (10) into the fastening opening (110) of the support metal element (100) that causes the engagement of the movable sealing disk (16) with the support metal element (100).

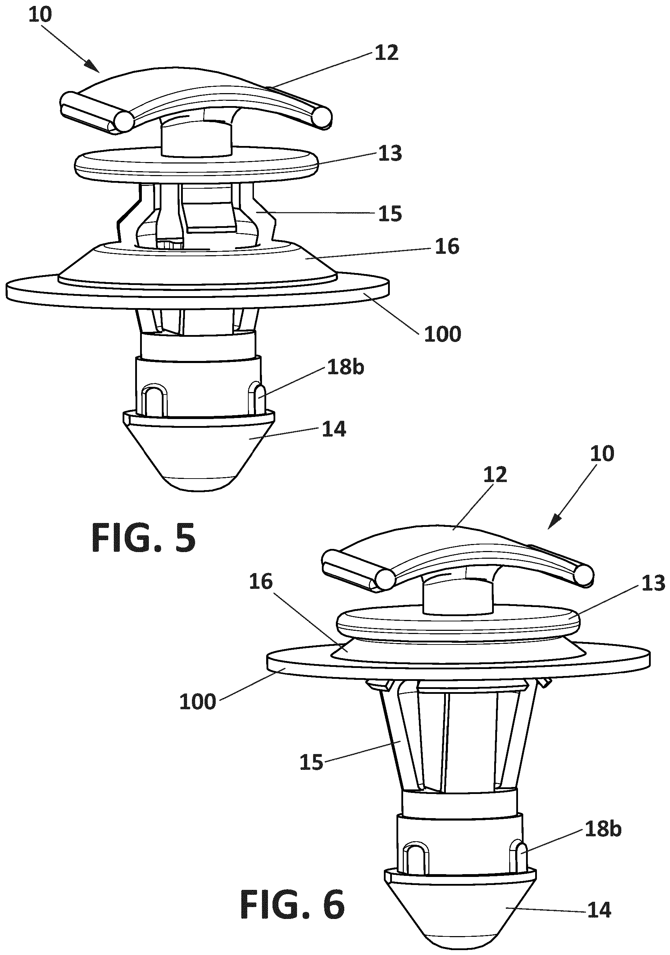

The procedure of fixing the clip (10) to the support metal element (100) can be shown in figures 3 to 6 that show how the shaft (15) of the plug (11) downwardly moves until the top (13) contacts the movable disk (16). In order to achieve this, a force is applied by a user onto the holding head (12) that causes the shaft (15) to move through the central hole of the disk (16) which is permanently engaged to the support metal element (100). The force is applied until the top (13) of the plug element (11) contacts the movable sealing disk (16) causing the fixation and sealing of the clip (10) with the support metal element (100) as shown in figure 6.

In some examples, the movable disk (16) can be formed by at least two sectors or parts. In some examples, those sectors may define a plurality of hollows (19) in the slip (17) of the movable disk (16) as shown in figure 10. These plurality of hollows (19) are adapted to receive a plurality of protrusions (18b) established in a lower part of the shaft (15) as shown e.g. in figures 5 and 6 and figures 8, 9 and 11. Those protrusions (18b) can enhance coupling between the movable disk (16) and the shaft (15) of the plug (10).

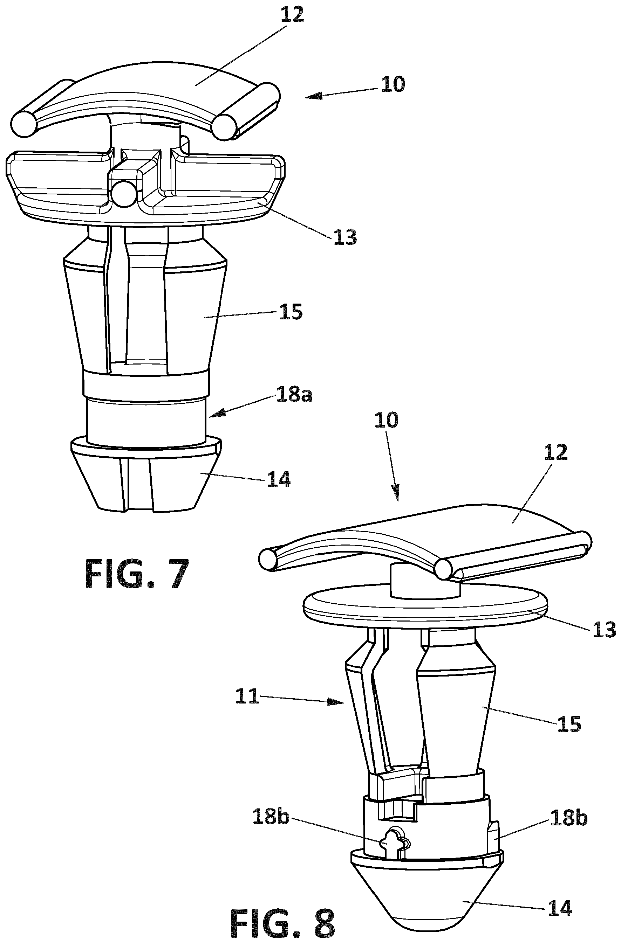

In another example shown in figure 7, the plug (11) can comprise a recess (18a) established in the lower part of the shaft (15). The recess (18a) is adapted to perform coupling with the movable disk (16) to enhance coupling between the movable disk (16) and the shaft (15).

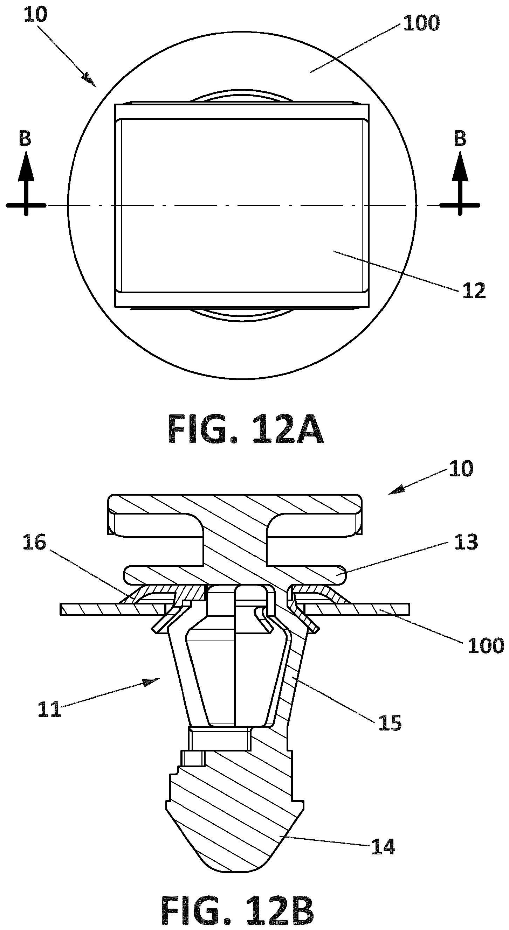

Finally, figures 12A and 12B show a section of the second fixation clip (10) fixed to the metal sheet (100) and a top view. In the section of figure 12, it can be appreciated that the movable disk (16) and the top (13) are in contact to the movement of the shaft (15) through the disk (13) causing the fixation and sealing of the clip (10) with respect to the metal sheet (100). It is also shown that due to the increase in the diameter of the shaft (15), the slip (17) having several sectors expand in order to reduce assembly forces of the clip.

### Second aspect:

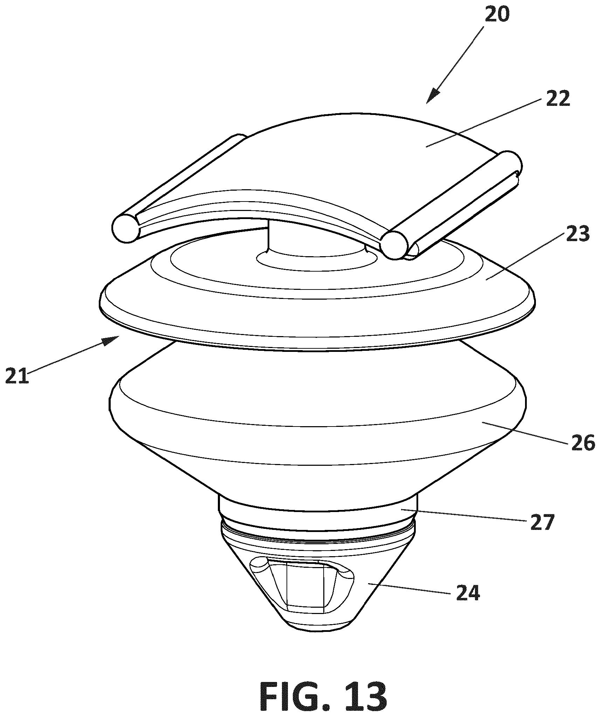

The second aspect according to the present invention relates to the clip including a bendable sealing part which is represented in figures 13 to 19.

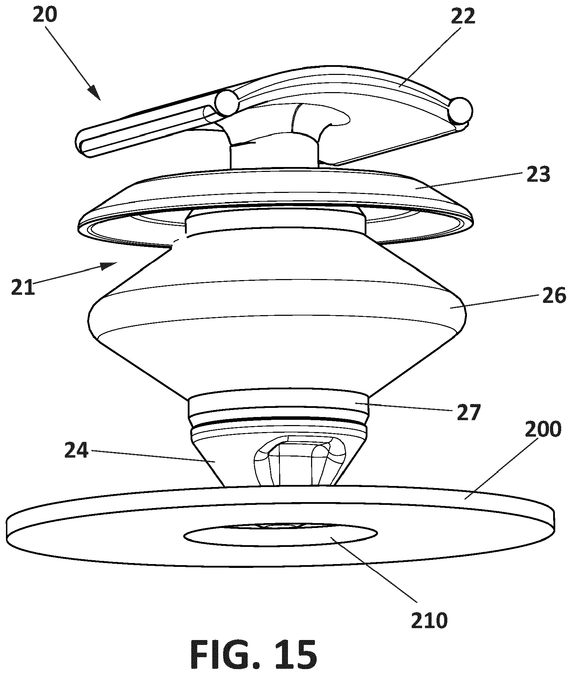

Figure 13 shows an example of a second fixation clip (20) according to the present invention. The second fixation clip (20) is adapted to be fixed to a support metal element or metal sheet (200) having a fastening opening (210) which is shown in figure 15.

As shown in figure 13, the fixation clip (20) comprises a plug element (21) having a holding head (22), a top (23) and a plug-in tip (24) which can be inserted into the fastening opening (210) of the metal sheet (200) as shown in figure 15.

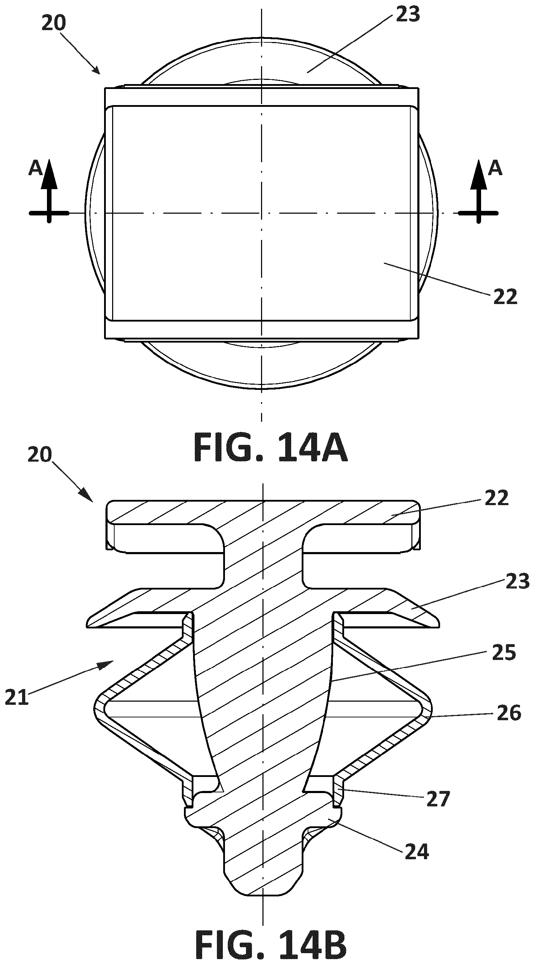

The plug-in tip (24) and the top (23) are fixedly connected by a shaft (25) that can be appreciated in figure 14. The fixation clip (20) also comprises a bendable sealing part (26) which has an accordion or spinning-top shape. In contrast to the movable sealing disk (16), the upper part of the bendable sealing part (26) is fixed to the top (23) of the plug (21). The bendable sealing part (26) comprises a slip (27) surrounding a lower part of the shaft (25) which is adjacent to the plug-in tip (24) as shown e.g. in the section of the clip (20) shown in figure 14. The bendable sealing part (26) is a soft part which bends when the plug element (21) is assembled on the metal-sheet hole (210). This bendable sealing part (26) achieves the sealing function when it is compressed by the hard part corresponding to the top (23) of the plug element (21) of the clip (20). Furthermore, the bendable sealing part (26) can comprise thermoplastic elastomers (TPE) and the plug element (21) can be a one machine shot with a hard plastic body.

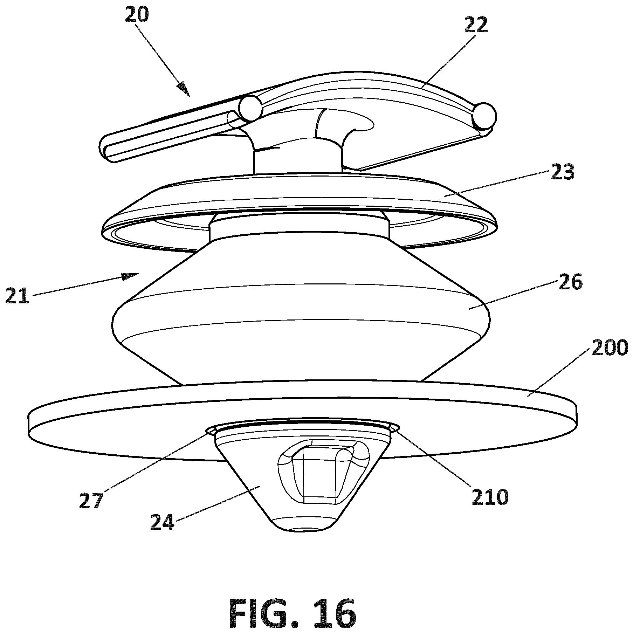

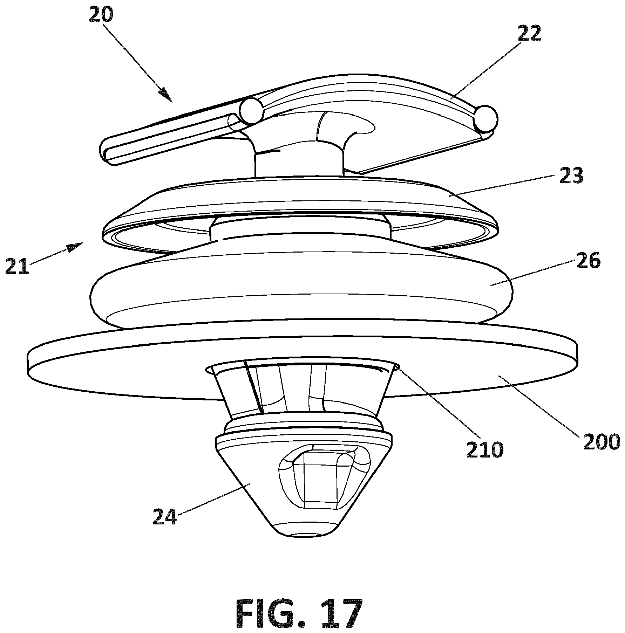

The bendable sealing part (26) is adapted to engage the metal sheet (200) by the fastening opening (210) by the insertion of the plug-in tip (24) and the slip (27) into the fastening opening (210) of the metal sheet (200) as shown in figure 16. A force applied on the holding head (22) causes the top (23) of the plug element (21) to compress or flatten the bendable sealing part (26) as shown in figure 17 at the same time the shaft (25) downwardly moves through the fastening opening (210).

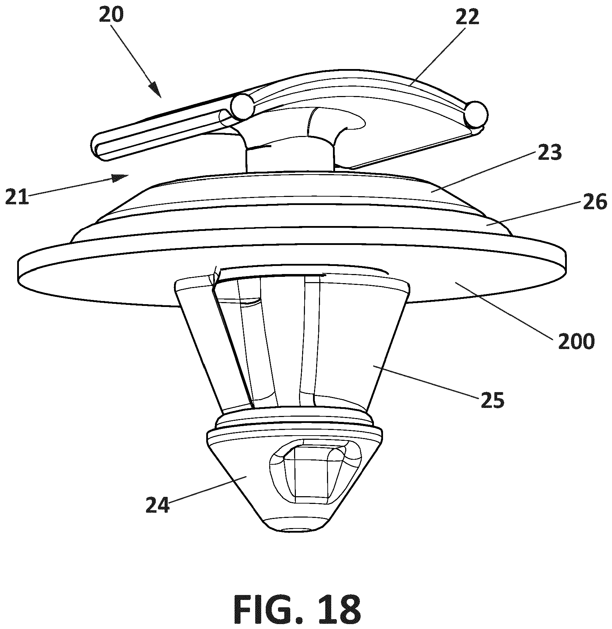

The procedure of fixing the clip (20) to the metal sheet (200) can be shown in figures 16 to 18 that show how the top (23) of the plug element (21) compresses or flattens the bendable sealing part (26) upon a force applied on the holding head (22) against the support metal element (200), causing the fixation of the clip (20) to the metal sheet (200) and providing the desired sealing function by means of the bendable sealing part (26) as shown in figure 18.

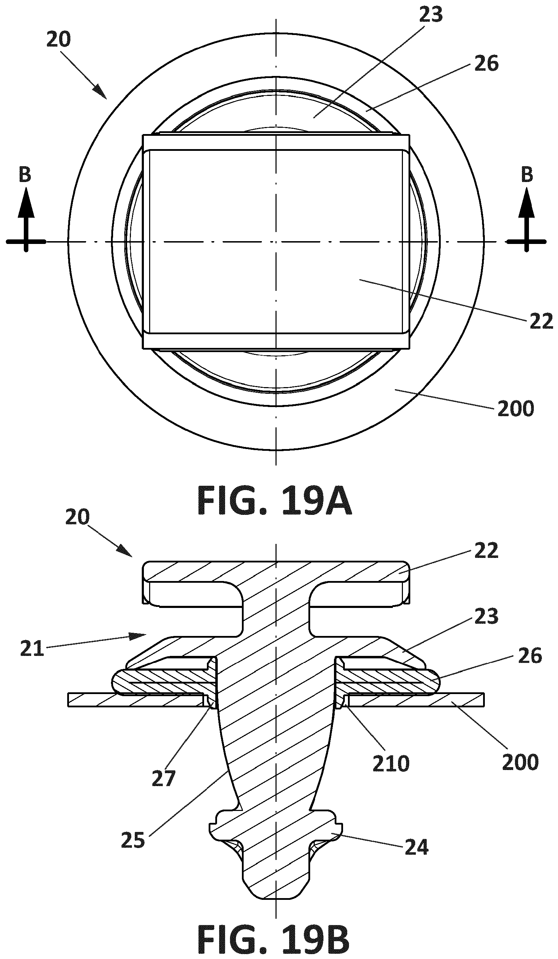

Finally, figure 19 shows a section of the second fixation clip (20) fixed to the metal sheet (200) and a top view. In the section of figure 19, it can be appreciated that the bendable sealing part (26) is completely bended due to the flattening or compressing action of the top (23) of the plug (21) and the shaft (25) is completely extended through the fastening opening (210). The flattening or compressing action of the top (23) causes the bending of the sealing part (26) and hence; the fixation and sealing of the clip (20) with respect to the metal sheet (200).

Even though reference has been made to a specific embodiment of the invention, it is obvious for a person skilled in the art that the fixation clips described herein are susceptible to numerous variations and modifications, and that all of the details mentioned can be substituted for other technically equivalent ones without departing from the scope of protection defined by the attached claims.

## Claims

1. A fixation clip (10) adapted to be fixed to a support metal element (100) having a fastening opening (110), the fixation clip (10) comprising:
a plug element (11) comprising a holding head (12), a top (13) and a plug-in tip (14) which can be inserted into the fastening opening (110) of the support metal element (100), wherein the plug-in tip (14) and the top (13) are fixedly connected to each other by a shaft (15), the fixation clip (10) **characterized by** further comprising:
a movable sealing disk (16) having a central hole and being overmolded around the shaft (15) of the fixation clip (10), the movable disk (16) having a slip (17) surrounding a lower part of the shaft (15) adjacent to the plug-in tip (14),
wherein the movable sealing disk (16) is adapted to engage the support metal element (100) by the fastening opening (110) by inserting the plug-in tip (14) and the slip (17) into the fastening opening (110) of the support metal element (100);
wherein a force applied on the holding head (12) causes the shaft (15) to be downwardly moved through the central hole such that the top (13) of the plug element (11) contacts the movable sealing disk (16) causing the fixation of the clip (10) to the support metal element (100).

2. The fixation clip (10) according to claim 1, wherein the plug element (11) is a one machine shot.

3. The fixation clip (10) according to claims 1 or 2, wherein the plug element (11) comprises a hard plastic body.

4. The fixation clip (10) according to any of the preceding claims, wherein the movable sealing disk (16) comprises at least two connecting parts.

5. The fixation clip (10) according to claim 4, wherein the movable sealing disk (16) further comprises a plurality of hollows (19).

6. The fixation clip (10) according to claim 5, wherein the plug (11) comprises one or more protrusions (18b) to be coupled with the plurality of hollows (19).

7. The fixation clip (10) according to claims 1 to 4, wherein the plug (11) comprises a recess (18a) to be coupled to the movable sealing disk (16).

8. The fixation clip (10) according to any of the preceding claims, wherein the movable sealing disk (16) comprises thermoplastic elastomers (TPE).

9. The fixation clip (10) according to any of the preceding claims, wherein the movable sealing disk (16) is overmolded around the shaft (15) of the fixation clip (10) without chemical adhesion.

10. A fixation clip (20) adapted to be fixed to a support metal element (200) having a fastening opening (210), the fixation clip (20) comprising:
a plug element (21) comprising a holding head (22), a top (23) and a plug-in tip (24) which can be inserted into the fastening opening (210) of the support metal element (200), wherein the plug-in tip (24) and the top (23) are fixedly connected to each other by a shaft (25), the fixation clip (20) **characterized by** further comprising:
a bendable sealing part (26) having a spinning-top shape the bendable sealing part (26) having a slip (27) surrounding a lower part of the shaft (25) which is adjacent to the plug-in tip (24),
wherein the bendable sealing part (26) is adapted to engage the support metal element (200) by the fastening opening (210) by the insertion of the plug-in tip (24) and the slip (27) into the fastening opening (210) of the support metal element (200);
wherein a force applied on the holding head (22) causes the top of the plug element (21) to flatten the bendable sealing part (26) against the support metal element (200) causing the fixation of the clip (20) to the support metal element (200).

11. The fixation clip (20) according to claim 10, wherein the plug element (21) is a one machine shot.

12. The fixation clip (20) according to claims 10 or 11 wherein the plug element (21) comprises hard plastic.

13. The fixation clip (20) according to claim 10, wherein the bendable sealing part (26) comprises thermoplastic elastomers (TPE).

## Patentansprüche

1. Fixierungsklemme (10), die dafür ausgelegt ist, an einem Metallauflageelement (100) mit einer Befestigungsöffnung (110) befestigt zu werden, die Fixierungsklemme (10) aufweisend:
ein Steckelement (11), das einen Haltekopf (12), einen Aufsatz (13) und eine Einsteckspitze (14), die in die Befestigungsöffnung (110) des Metallauflageelements (100) eingeführt werden kann, aufweist, wobei die Einsteckspitze (14) und der Aufsatz (13) durch einen Schaft (15) fest miteinander verbunden sind, wobei die Fixierungsklemme (10) **dadurch gekennzeichnet ist, dass** sie ferner aufweist:
eine bewegliche Dichtungsscheibe (16), die ein zentrales Loch aufweist und um den Schaft (15) der Fixierungsklemme (10) angeformt ist, wobei die bewegliche Scheibe (16) einen Gleitschuh (17) aufweist, der einen unteren Teil des Schafts (15) benachbart zu der Einsteckspitze (14) umgibt,
wobei die bewegliche Dichtungsscheibe (16) dafür ausgelegt ist, das Metallauflageelement (100) mittels der Befestigungsöffnung (110) durch Einführen der Einsteckspitze (14) und des Gleitschuhs (17) in die Befestigungsöffnung (110) des Metallauflageelements (100) in Eingriff zu nehmen;
wobei eine auf den Haltekopf (12) ausgeübte Kraft bewirkt, dass der Schaft (15) durch das zentrale Loch hindurch nach unten bewegt wird, sodass der Aufsatz (13) des Steckelements (11) die bewegliche Dichtungsscheibe (16) berührt, wodurch die Fixierung der Klemme (10) an dem Metallauflageelement (100) bewirkt wird.

2. Fixierungsklemme (10) nach Anspruch 1, wobei das Steckelement (11) ein Einzelspritzgussstück ist.

3. Fixierungsklemme (10) nach Anspruch 1 oder 2, wobei das Steckelement (11) einen harten Kunststoffkörper aufweist.

4. Fixierungsklemme (10) nach einem der vorhergehenden Ansprüche, wobei die bewegliche Dichtungsscheibe (16) zumindest zwei Verbindungsteile aufweist.

5. Fixierungsklemme (10) nach Anspruch 4, wobei die bewegliche Dichtungsscheibe (16) ferner eine Vielzahl von Ausnehmungen (19) aufweist.

6. Fixierungsklemme (10) nach Anspruch 5, wobei der Stecker (11) einen oder mehrere Vorsprünge (18b) aufweist, die mit der Vielzahl von Ausnehmungen (19) gekoppelt werden sollen.

7. Fixierungsklemme (10) nach Anspruch 1 bis 4, wobei der Stecker (11) eine Vertiefung (18a) aufweist, die mit der beweglichen Dichtungsscheibe (16) gekoppelt werden soll.

8. Fixierungsklemme (10) nach einem der vorhergehenden Ansprüche, wobei die bewegliche Dichtungsscheibe (16) thermoplastische Elastomere (TPE) aufweist.

9. Fixierungsklemme (10) nach einem der vorhergehenden Ansprüche, wobei die bewegliche Dichtungsscheibe (16) ohne chemische Haftung um den Schaft (15) der Fixierungsklemme (10) angeformt ist.

10. Fixierungsklemme (20), die dafür ausgelegt ist, an einem Metallauflageelement (200) mit einer Befestigungsöffnung (210) befestigt zu werden, die Fixierungsklemme (20) aufweisend:
ein Steckelement (21), das einen Haltekopf (22), einen Aufsatz (23) und eine Einsteckspitze (24), die in die Befestigungsöffnung (210) des Metallauflageelements (200) eingeführt werden kann, aufweist, wobei die Einsteckspitze (24) und der Aufsatz (23) durch einen Schaft (25) fest miteinander verbunden sind, wobei die Fixierungsklemme (20) **dadurch gekennzeichnet ist, dass** sie ferner aufweist:
ein biegbares Dichtungsteil (26), das eine Kreiselform aufweist, wobei das biegbare Dichtungsteil (26) einen Gleitschuh (27) aufweist, der einen unteren Teil des Schafts (25), der benachbart zu der Einsteckspitze (24) ist, umgibt,
wobei das biegbare Dichtungsteil (26) dafür ausgelegt ist, das Metallauflageelement (200) mittels der Befestigungsöffnung (210) durch das Einführen der Einsteckspitze (24) und des Gleitschuhs (27) in die Befestigungsöffnung (210) des Metallauflageelements (200) in Eingriff zu nehmen;
wobei eine auf den Haltekopf (22) ausgeübte Kraft bewirkt, dass der Aufsatz des Steckelements (21) das biegbare Dichtungsteil (26) gegen das Metallauflageelement (200) verflacht, wodurch die Fixierung der Klemme (20) an dem Metallauflageelement (200) bewirkt wird.

11. Fixierungsklemme (20) nach Anspruch 10, wobei das Steckelement (21) ein Einzelspritzgussstück ist.

12. Fixierungsklemme (20) nach Anspruch 10 oder 11, wobei das Steckelement (21) Hartkunststoff aufweist.

13. Fixierungsklemme (20) nach Anspruch 10, wobei das biegbare Dichtungsteil (26) thermoplastische Elastomere (TPE) aufweist.

## Revendications

1. Clip de fixation (10) adapté pour être fixé à un élément métallique de support (100) ayant une ouverture de fixation (110), le clip de fixation (10) comprenant :
un élément enfichable (11) comprenant une tête de maintien (12), une partie supérieure (13) et une pointe d'enfichage (14) qui peut être insérée dans l'ouverture de fixation (110) de l'élément métallique de support (100), dans lequel la pointe d'enfichage (14) et la partie supérieure (13) sont reliées de manière fixe l'une à l'autre par un arbre (15), l'attache de fixation (10) étant **caractérisée en ce qu'**elle comprend en outre :
un disque d'étanchéité mobile (16) ayant un trou central et étant surmoulé autour de l'arbre (15) du clip de fixation (10), le disque mobile (16) ayant une glissière (17) entourant une partie inférieure de l'arbre (15) adjacente à la pointe d'enfichage (14),
dans lequel le disque d'étanchéité mobile (16) est adapté pour s'engager avec l'élément métallique de support (100) par l'ouverture de fixation (110) par l'insertion de la pointe d'enfichage (14) et de la glissière (17) dans l'ouverture de fixation (110) de l'élément métallique de support (100) ;
dans lequel une force appliquée sur la tête de maintien (12) amène l'arbre (15) à être déplacé vers le bas à travers le trou central de sorte que la partie supérieure (13) de l'élément enfichable (11) entre en contact avec le disque d'étanchéité mobile (16) provoquant la fixation du clip (10) à l'élément métallique de support (100).

2. Clip de fixation (10) selon la revendication 1, dans laquelle l'élément enfichable (11) est un coup de machine unique.

3. Clip de fixation (10) selon la revendication 1 ou 2, dans laquelle l'élément enfichable (11) comprend un corps en plastique dur.

4. Clip de fixation (10) selon l'une quelconque des revendications précédentes, dans lequel le disque d'étanchéité mobile (16) comprend au moins deux parties de connexion.

5. Clip de fixation (10) selon la revendication 4, dans laquelle le disque d'étanchéité mobile (16) comprend en outre une pluralité de creux (19).

6. Clip de fixation (10) selon la revendication 5, dans laquelle la fiche (11) comprend une ou plusieurs saillies (18b) à coupler avec la pluralité de creux (19).

7. Clip de fixation (10) selon les revendications 1 à 4, dans lequel la fiche (11) comprend un évidement (18a) à coupler au disque d'étanchéité mobile (16).

8. Clip de fixation (10) selon l'une quelconque des revendications précédentes, dans lequel le disque d'étanchéité mobile (16) comprend des élastomères thermoplastiques (TPE).

9. Clip de fixation (10) selon l'une quelconque des revendications précédentes, dans lequel le disque d'étanchéité mobile (16) est surmoulé autour de l'arbre (15) du clip de fixation (10) sans adhérence chimique.

10. Clip de fixation (20) adapté pour être fixé à un élément métallique de support (200) ayant une ouverture de fixation (210), le clip de fixation (20) comprenant :
un élément enfichable (21) comprenant une tête de maintien (22), une partie supérieure (23) et une pointe d'enfichage (24) qui peut être insérée dans l'ouverture de fixation (210) de l'élément métallique de support (200), dans lequel la pointe d'enfichage (24) et la partie supérieure (23) sont reliées de manière fixe l'une à l'autre par un arbre (25), l'attache de fixation (20) étant **caractérisée en ce qu'**elle comprend en outre :
une partie de scellement pliable (26) ayant une forme de toupie, la partie de scellement pliable (26) ayant une glissière (27) entourant une partie inférieure de l'arbre (25) qui est adjacente à la pointe d'enfichage (24),
dans lequel la partie d'étanchéité pliable (26) est adaptée pour s'engager avec l'élément métallique de support (200) par l'ouverture de fixation (210) par l'insertion de la pointe d'enfichage (24) et de la glissière (27) dans l'ouverture de fixation (210) de l'élément métallique de support (200) ;
dans lequel une force appliquée sur la tête de maintien (22) amène la partie supérieure de l'élément enfichable (21) à aplatir la partie d'étanchéité pliable (26) contre l'élément métallique de support (200) provoquant la fixation du clip (20) à l'élément métallique de support (200).

11. Clip de fixation (20) selon la revendication 10, dans laquelle l'élément enfichable (21) est un coup de machine unique.

12. Clip de fixation (20) selon la revendication 10 ou 11, dans laquelle l'élément enfichable (21) comprend du plastique dur.

13. Clip de fixation (20) selon la revendication 10, dans lequel la partie d'étanchéité pliable (26) comprend des élastomères thermoplastiques (TPE).
